# EUROPEAN PATENT APPLICATION

(11) **EP 3 101 182 A1**
(43) Date of publication of application: **07.12.2016**
(21) Application number: 14880259.8
(22) Date of filing: 27.01.2014
(51) Int. Cl.: E02F 9/20, E02F 9/02

(54) **TRAVELLING CONTROL DEVICE FOR CONSTRUCTION MACHINE AND CONTROL METHOD THEREOF**

(71) Applicant: Volvo Construction Equipment AB, 631 85 Eskilstuna (SE)
(72) Inventor: KIM, Dong-Soo, Changwon-si Gyeongsangnam-do 645-779 (KR); BAE, Sang-Ki, Changwon-si Gyeongsangnam-do 642-770 (KR)
(74) Representative: Gulde & Partner
(86) International application number: PCT/KR2014/000753
(87) International publication number: WO 2015/111779

(57) **Abstract**

Disclosed are a travelling control device for a construction machine for travelling a long distance by adjusting only one of left and right travelling pedals and a control method thereof. The present invention provides a travelling control device for a construction machine, the travelling control device comprising: a hydraulic pump; left and right travelling motors which are connected to the hydraulic pump; left and right travelling operation devices which output an operation signal during an operation; a travelling operation signal detection means which detects an operation signal by an operation of the left and right travelling operation devices; a travelling mode configuration means which selects a straight travelling mode or a general travelling mode; and a controller which, when the straight travelling mode has been selected, identically controls driving speeds of the left and right travelling motors in accordance with an operation signal of one travelling operation device among the left and right traveling operation devices in the case of operating the one travelling operation device, and applies a control signal to make a difference of the driving speeds occur in driving units of the left and right travelling motors in order to change a travelling direction by a driving speed difference of the left and right travelling motors in a case of operating the other travelling operation device among the left and right travelling operation devices.

## Description

### TECHNICAL FIELD

The present disclosure relates to a travel control device for a construction machine and a control method thereof. More specifically, the present disclosure relates to a travel control device for a construction machine and a control method thereof, the device and method allowing the construction machine to travel over a long distance by manipulating only one of left and right driving pedals.

### BACKGROUND ART

For travelling straight, a travel control device of a prior art requires an operator to place his/her feet on the travel control units (in particular, driving pedals) disposed within a cab and press them. Thus, an operator is required to maintain his/her feet on the driving pedals in a shaking construction machine when the construction machine travels over a long distance. This requires the operator to suffer from the difficulty in balancing his/her body for a long time, which degrades the operability of the construction machine.

### DISCLOSURE

### Technical Problem

Accordingly, the present disclosure has been made in consideration of the above problems occurring in the related art, and the present disclosure proposes a travel control device for a construction machine and a control method thereof, the device and method allowing an operator to conveniently drive the construction machine over a long distance by manipulating only one of left and right driving pedals.

### Technical Solution

According to an aspect of the present disclosure, a travel control device for a construction machine may include a hydraulic pump, left and right travel motors, left and right travel control units, a travel control signal detecting unit, a travel mode setting unit, and a controller.

The left and right travel motors are actuated by hydraulic fluid supplied by the hydraulic pump.

The left and right travel control units output travel control signals in proportion to degrees of manipulation when manipulated.

The travel control signal detecting unit detects the travel control signals in response to the left and right travel control units being manipulated.

The travel mode setting unit selects one travel mode of a straight travel mode and a common travel mode.

The controller applies control signals to driving units driving the left and right travel motors such that, when the straight travel mode is selected by the travel mode setting unit. When one of the left and right travel controlling units is manipulated, driving speeds of the left and right driving motors are controlled to be the same to correspond to the travel control signals output by the manipulated travel control unit. When the other of the left and right travel control units is manipulated, driving speeds of the left and right driving motors are controlled to be different from each other to thereby change a direction of travel due to a difference between the driving speeds of the left and right driving motors.

According to an exemplary embodiment, the left and right travel control units may include electrical travel control units.

The electrical travel control units may output electrical control signals in proportion to the degrees of manipulation when manipulated.

According to another aspect of the present disclosure, provided is a control method of a travel control device for a construction machine. The control method may include:

selecting one travel mode of a straight travel mode and a common travel mode for a construction machine, the construction machine including a travel control device, the travel control device including a hydraulic pump, left and right travel motors actuated by hydraulic fluid supplied by the hydraulic pump, left and right travel control units outputting travel control signals in proportion to degrees of manipulation when manipulated, a travel control signal detecting unit for detecting the travel control signals in response to the left and right travel control units being manipulated, a travel mode setting unit for selecting one travel mode of the straight travel mode and the common travel mode, and a controller applying control signals to driving units of the left and right travel motors when the travel control signals are input in response to the left and right travel control units being manipulated;

when one travel control unit of the left and right travel control units is manipulated after the straight travel mode is selected, applying the control signals to the driving units of the left and right travelling motors, such that the left and right travelling motors have a same driving speed corresponding to the travel control signal of the manipulated travel control unit; and
when the other travel control unit of the left and right travel control units is manipulated after the straight travel mode is selected, applying the control signals to the driving units of the left and right travelling motors, such that the left and right driving motors have different driving speeds, whereby a direction of travel is changed due to a difference between the driving speeds of the left and right driving motors.

The control method may further include: when the left and right travel control units are manipulated after the common travel mode is selected, calculating driving speeds of the left and right travelling motors corresponding to the travel control signals of the travel control units, and applying the control signals to the driving units of the left and right travelling motors such that the control signals corresponding to the calculated driving speeds of the left and right travelling motors.

### Advantageous Effects

According to the present disclosure, an operator can drive a construction machine over a long distance by manipulating only one of left and right driving pedals using one foot while placing the other foot on the floor of the cab, away from the other driving pedal. This can consequently improve convenience and effectiveness in travel control.

### DESCRIPTION OF DRAWINGS

FIG. 1 is a hydraulic circuit diagram of a travel control device for a construction machine according to an exemplary embodiment;
FIG. 2 is a block diagram of the travel control device; and
FIG. 3 is a flowchart of a control method of a travel control device for a construction machine according to an exemplary embodiment.

### <Description of the Reference Numerals in the Drawings>

- 1:: engine
- 2:: hydraulic pump
- 3:: pilot pump
- 4:: left travel motor
- 5:: right travel motor
- 6, 7:: travel control valve
- 8:: left travel control unit
- 9:: right travel control unit

### BEST MODE

Hereinafter, reference will be made in detail to a travel control device for a construction machine and a control method thereof according to exemplary embodiments in conjunction with the accompanying drawings.

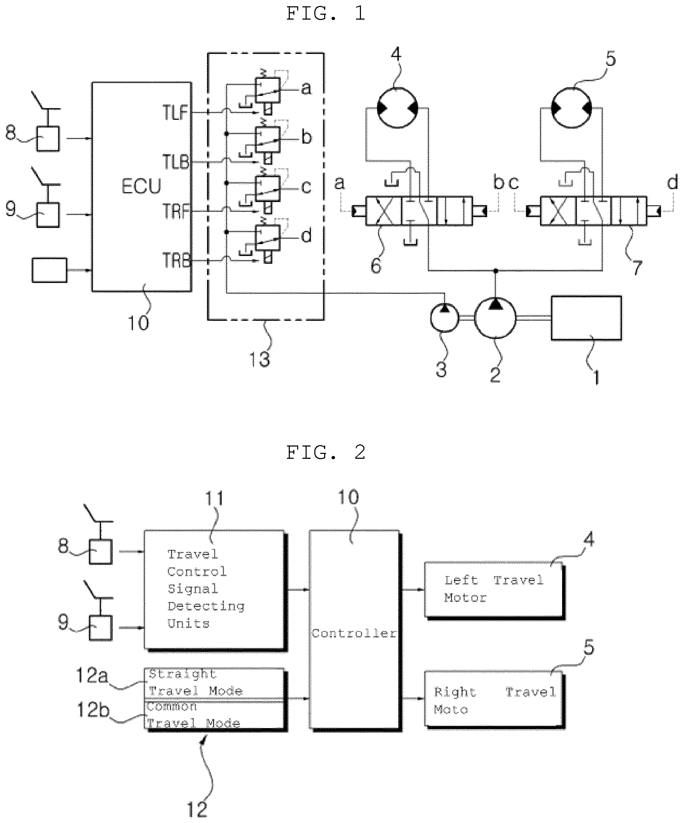

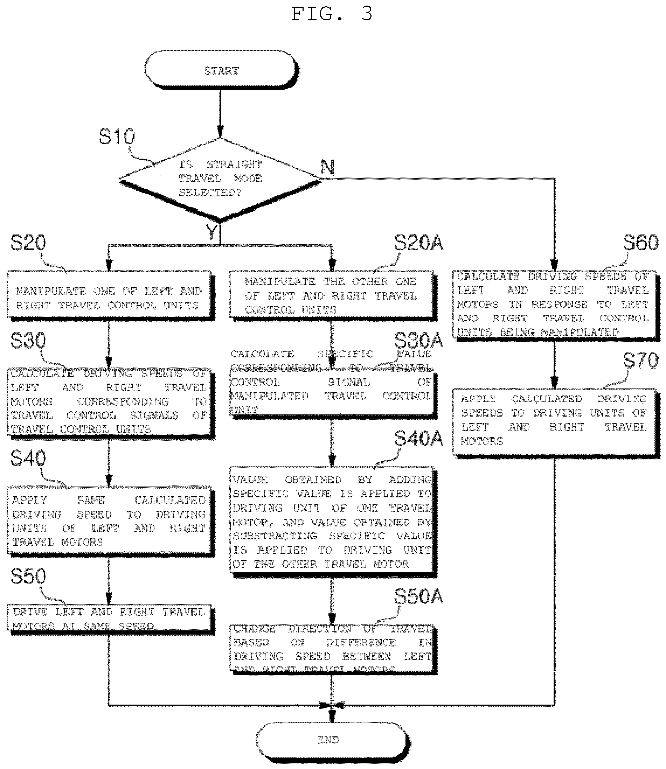

FIG. 1 is a hydraulic circuit diagram of a travel control device for a construction machine according to an exemplary embodiment, FIG. 2 is a block diagram of the travel control device, and FIG. 3 is a flowchart of a control method of a travel control device for a construction machine according to an exemplary embodiment.

Referring to FIG. 1 and FIG. 2, the travel control device includes: a hydraulic pump 2, a pilot pump 3, left and right travel motors 4 and 5, left and right travel control units 8 and 9, a travel control signal detecting unit 11, a travel mode setting unit 12, and a controller 10.

The hydraulic pump 2 and the pilot pump 3 are driven by an engine 1.

The left and right travel motors 4 and 5 are actuated by hydraulic fluid supplied by the hydraulic pump 2.

The left and right travel control units 8 and 9 output travel control signals in proportion to degrees of manipulation when manipulated. (For example, the left travel control unit 8 may be a straight travel pedal, and the right travel control unit 9 may be a direction change pedal.)

The travel control signal detecting unit 11 detects the travel control signals in response to the left and right travel control units 8 and 9 being manipulated.

The travel mode setting unit 12 allows one travel mode of a straight travel mode and a common travel mode to be selected.

In the case in which the straight travel mode is selected in response to the travel mode setting unit 12 being manipulated, when one of the left and right travel control units 8 and 9 (for example, the left travel control unit 8) is manipulated, the controller 10 applies control signals to driving units of the left and right driving motors 4 and 5, such that the driving speeds of the left and right driving motors 4 and 5 are controlled to be the same to correspond to the travel control signals output by the travel control units. When the other of the left and right travel control units 8 and 9 (for example, the right travel control unit 9) is manipulated, the controller 10 applies control signals to the driving units of the left and right driving motors 4 and 5, such that the driving speeds of the left and right driving motors 4 and 5 are controlled to be different from each other, thereby changing the direction of travel due to the difference between the driving speeds of the left and right driving motors 4 and 5.

The left and right travel control units 8 and 9 may be electrical travel control units.

The electrical travel control units output electrical control signals in proportion to degrees of manipulation when manipulated.

In the above-described configuration, when the travel control units 8 and 9 are manipulated for travelling straight, travel control signals are detected by the travel control signal detecting unit 11, and the detected travel control signals are input to the controller 10. In response to electrical signals input to an electric proportional valve 13 by the controller 10 to correspond to degrees of manipulation of the travel control units 8 and 9, the pressure of hydraulic fluid supplied by the pilot pump 2 is converted to second pilot pressures. When the converted second pilot pressures a and c are applied to travel control valves 6 and 7, the spools thereof are switched to the right, as per the drawing. Then, hydraulic fluid from the hydraulic pump 2 is supplied to the left and right driving motors 4 and 5, whereby the construction machine can travel straight.

FIG. 3 illustrates the control method of the travel control device, wherein the travel control device for a construction machine includes the hydraulic pump 2, the pilot pump 3, the left and right travel motors 4 and 5 actuated by hydraulic fluid supplied by the hydraulic pump 2, the left and right travel control units 8 and 9 outputting travel control signals in proportion to degrees of manipulation when manipulated, the travel control signal detecting unit 11 for detecting the travel control signals in response to the left and right travel control units 8 and 9 being manipulated, the travel mode setting unit 12 allowing one travel mode of a straight travel mode and a common travel mode to be selected, and the controller 10 applying control signals to the driving units of the left and right travel motors 4 and 5 when travel control signals in response to the manipulation of the left and right travel control units 8 and 9 are input. The control method includes the following steps:

In step S10, one travel mode of the straight travel mode and the common travel mode is selected;

When one manipulation unit 8 of the left and right travel control units 8 and 9 is manipulated in step S20 after the straight travel mode is selected, control signals are applied to the driving units of the left and right travel motors 4 and 5, such that the left and right travel motors 4 and 5 have the same driving speed corresponding to the travel control signal of the manipulated travel control unit in steps S30, S40, and S50.

When the other manipulation unit 9 of the left and right travel control units 8 and 9 is manipulated in step S20A, after the straight travel mode is selected the driving speed corresponding to the travel control signal of the manipulated travel control unit is calculated in step S30A. In step S40A, a resultant driving speed obtained by adding the calculated driving speed to the same driving speed of the left and right travel motors 4 and 5 calculated in step S40 is applied to the driving unit of one travel motor 4 or 5 of the left and right travel motors 4 and 5, and a resultant driving speed obtained by subtracting the calculated driving speed from the same driving speed of the left and right travel motors 4 and 5 calculated in step S40 is applied to the driving unit of the other travel motor 5 or 4 of the left and right travel motors 4 and 5. Thus, in step S50A, the direction of travel is changed based on the difference in the driving speed between the left and right travel motors 4 and 5.

When the left and right travel control units 8 and 9 are manipulated in step S60, after the common travel mode is selected, the driving speeds of the left and right travel motors 4 and 5 corresponding to travel control signals of the travel control units 8 and 9 are calculated. In steps S70, control signals corresponding to the calculated driving speeds of the left and right travel motors 4 and 5 are applied to the driving units of the left and right travel motors 4 and 5.

According to the above-described configuration, in step S10 in FIG. 2, it is determined whether the straight travel mode 12a or the common travel mode 12b is selected by the operator 12b. When the straight travel mode 12a is selected, steps S20 and S20A are performed. When the common travel mode 12b is selected, step S60 is performed.

When the travel control unit 8 of the left and right travel control units 8 and 9 is manipulated in step S20 after the straight travel mode 12a is selected, the driving speeds are calculated to correspond to the travel control signal of the manipulated travel control unit 8 in step S30.

In step S40, the driving speeds of the left and right driving motors 4 and 5, calculated such that the driving speeds of the left and right driving motors 4 and 5 are the same, are applied to the driving units of the left and right travel motors 4 and 5. Thus, when the travel control unit 8 of the left and right travel control units 8 and 9 is manipulated after the straight travel mode 12a is selected, the driving speeds of the left and right driving motors 4 and 5 can be controlled to be the same in step S50.

When the travel control unit 9 of the left and right travel control units 8 and 9 is manipulated in step S20A after the straight travel mode 12a is selected, a driving speed corresponding to the travel control signal of the manipulated travel control unit 9 is calculated in step S30A.

In step S40A, a resultant driving speed obtained by adding the calculated driving speed to the same driving speed of the left and right travel motors 4 and 5 calculated in step S50 is applied to the driving unit of one travel motor 4 or 5 of the left and right travel motors 4 and 5, and a resultant driving speed obtained by subtracting the calculated driving speed from the same driving speed of the left and right travel motors 4 and 5 calculated in step S50 is applied to the driving unit of the other travel motor 5 or 4 of the left and right travel motors 4 and 5. Thus, when the other travel control unit 9 of the left and right travel control units 8 and 9 is manipulated after the straight travel mode 12a is selected, the direction of travel of the construction machine can be changed based on the difference in the driving speed between the left and right travel motors 4 and 5.

At this time, the travel control units control the travel motors to travel forwards and backwards. If a driving speed corresponding to forward travel has a positive value (+), a driving speed corresponding to backward travel has a negative value (-). During the straight travel by manipulation of one travel control unit in step S20, the direction of travel can be changed, based on the calculation in response to the manipulation of the other travel control unit.

When the left and right manipulation units 8 and 9 are manipulated after the common travel mode 12b is selected, the driving speeds of the left and right travel motors 4 and 5 corresponding to the travel control signals of the left and right manipulation units 8 and 9 are calculated in step S60.

In step S70, the control signals corresponding to the calculated driving speeds of the left and right travel motors 4 and 5 are applied to the driving units of the left and right travel motors 4 and 5. Thus, when the left and right travel control units 8 and 9 are manipulated after the common travel mode 12b is selected, it is possible to control the left and right driving motors 4 and 5 to correspond to the travel control signals of the left and right travel control units 8 and 9.

Although the exemplary embodiments of the present disclosure have been described for illustrative purposes, a person having ordinary skill in the art will appreciate that various modifications and alterations are possible, without departing from the scope and spirit of the present invention as disclosed in the accompanying claims.

### INDUSTRIAL APPLICABILITY

According to the present disclosure as set forth above, an operator can conveniently drive a construction machine over a long distance through manipulating only one of left and right driving pedals.

## Claims

1. A travel control device for a construction machine, comprising:
a hydraulic pump;
left and right travel motors actuated by hydraulic fluid supplied by the hydraulic pump;
left and right travel control units outputting travel control signals in proportion to degrees of manipulation when manipulated;
a travel control signal detecting unit for detecting the travel control signals in response to the left and right travel control units being manipulated;
a travel mode setting unit for selecting one travel mode of a straight travel mode and a common travel mode; and
a controller applying control signals to driving units driving the left and right travel motors such that, when the straight travel mode is selected by the travel mode setting unit,
when one of the left and right travel control units is manipulated, driving speeds of the left and right driving motors are controlled to be the same to correspond to the travel control signal output by the one of the left and right travel control units, and
when the other of the left and right travel control units is manipulated, the driving speeds of the left and right driving motors are controlled to be different from each other to thereby change a direction of travel due to a difference between the driving speeds of the left and right driving motors.

2. The travel control device of claim 1, wherein the left and right travel control units comprise electrical travel control units outputting electrical control signals in proportion to degrees of manipulation when manipulated.

3. A control method of a travel control device for a construction machine, the method comprising:
selecting one travel mode of a straight travel mode and a common travel mode for a construction machine, the construction machine comprising a travel control device, the travel control device comprising a hydraulic pump, left and right travel motors actuated by hydraulic fluid supplied by the hydraulic pump, left and right travel control units outputting travel control signals in proportion to degrees of manipulation when manipulated, a travel control signal detecting unit for detecting the travel control signals in response to the left and right travel control units being manipulated, a travel mode setting unit for selecting one travel mode of the straight travel mode and the common travel mode, and a controller applying control signals to driving units of the left and right travel motors when the travel control signals are input in response to the left and right travel control units being manipulated, the control method comprising:
when one travel control unit of the left and right travel control units is manipulated after the straight travel mode is selected, applying the control signals to the driving units of the left and right travel motors, such that the left and right travel motors have a same driving speed corresponding to the travel control signal of the manipulated travel control unit; and
when the other travel control unit of the left and right travel control units is manipulated after the straight travel mode is selected, applying the control signals to the driving units of the left and right travel motors, such that the left and right driving motors have different driving speeds, whereby a direction of travel is changed due to a difference between the driving speeds of the left and right driving motors.

4. The control method of claim 3, further comprising:
when the left and right travel control units are manipulated after the common travel mode is selected, calculating driving speeds of the left and right travel motors corresponding to the travel control signals of the travel control units, and applying the control signals to the driving units of the left and right travel motors such that the control signals correspond to the calculated driving speeds of the left and right travel motors.
